# EUROPEAN PATENT APPLICATION

(11) **EP 4 847 971 A1**
(43) Date of publication of application: **02.12.2026**
(21) Application number: 26182323.1
(22) Date of filing: 01.06.2026
(51) Int. Cl.: G01V 1/28, G01V 1/30, G01V 1/38

(54) **SYSTEMS AND METHODS FOR MACHINE-LEARNING-BASED ULTRA-LOW-FREQUENCY SEISMIC DATA RECONSTRUCTION AND FULL WAVEFORM INVERSION**

(30) Priority: 30.05.2025 US 202563814516 P
(71) Applicant: Services Pétroliers Schlumberger, 75007 Paris (FR); GeoQuest Systems B.V., 2514 JG The Hague (NL)
(72) Inventor: ZARKHIDZE, Alexander, Houston, Texas 77042 (US); HU, Chaoshun, Houston, Texas 77042 (US); TANG, Hengyu, Houston, Texas 77042 (US); ALLEN, Tristan, Houston, Texas 77042 (US); CHENG, Xin, Houston, Texas 77042 (US)
(74) Representative: Schlumberger Intellectual Property Department

(57) **Abstract**

Systems and methods for machine-learning-based ultra-low-frequency seismic data (SD) reconstruction and full waveform inversion (FWI) are provided. A method includes: obtaining ocean bottom node (OBN) SD acquired using one or more seismic sources, obtaining sparse ultra-low-frequency (ULF) SD acquired using one or more specialized ULF seismic sources, sampled at a lower spatial or shot density than the OBN SD, obtaining a subsurface velocity model, training a machine learning (ML) model using: at least a portion of the OBN SD as an input, and the sparse ULF SD as a training target, the ML model being trained to enhance low-frequency content of the OBN SD based on the sparse ULF SD, generating enhanced SD by executing the trained ML model on the OBN SD to reconstruct ultra-low-frequency seismic components across the OBN SD, and performing FWI using the enhanced SD to update the subsurface velocity model.

## Description

### CROSS-REFERENCE TO RELATED APPLICATIONS

This application claims the benefit of and priority to U.S. Provisional Application No. 63/814,516, filed on May 30, 2025, the entirety of which is incorporated herein for all purposes.

### TECHNICAL FIELD

This disclosure generally relates to systems and methods for machine-learning-based ultra-low-frequency seismic data reconstruction and full waveform inversion.

### BACKGROUND

Seismic imaging of the subsurface commonly relies on ocean bottom node (OBN) seismic data and full waveform inversion (FWI) to estimate subsurface velocity models for exploration and development activities. The accuracy and convergence of FWI are highly sensitive to the availability of low-frequency seismic energy, particularly ultra-low-frequency (ULF) components, which help constrain long-wavelength features of the velocity model. In many OBN surveys, however, seismic data acquired using standard seismic sources exhibit limited signal-to-noise ratios at ultra-low frequencies, making it difficult to obtain reliable starting models or achieve stable inversion results. Although specialized ULF seismic sources can provide improved low-frequency content, such sources are often costly and are therefore typically deployed only sparsely, if at all, across a survey area. As a result, seismic datasets frequently contain dense OBN seismic data with limited ULF content and sparse ULF seismic data that is insufficient on its own to support survey-wide inversion workflows.

To address these challenges, practitioners have explored hybrid acquisition strategies that combine dense OBN seismic data with sparsely sampled ULF seismic data, as well as staged or joint FWI workflows. However, effectively leveraging sparse ULF seismic data to enhance low-frequency content across an entire OBN dataset remains a technical challenge. In particular, conventional processing techniques do not readily extrapolate or reconstruct missing ultra-low-frequency seismic components from sparsely sampled measurements in a manner that consistently improves FWI convergence and velocity model accuracy. Recent advances in machine learning have shown potential for learning relationships between seismic datasets acquired with different source characteristics, but integrating such techniques into physically meaningful seismic inversion workflows, while accommodating sparse ULF sampling and producing improved subsurface velocity models, continues to present unresolved difficulties.

Accordingly, there is a need for systems and methods for machine-learning-based ultra-low-frequency seismic data reconstruction and full waveform inversion.

### SUMMARY

This disclosure pertains to systems and methods for machine-learning-based ultra-low-frequency seismic data reconstruction and full waveform inversion.

A first aspect of this disclosure pertains to a computer-implemented method, including: obtaining ocean bottom node (OBN) seismic data acquired using one or more seismic sources, obtaining sparse ultra-low-frequency (ULF) seismic data acquired using one or more specialized ULF seismic sources, the sparse ULF seismic data being sampled at a lower spatial or shot density than the OBN seismic data, obtaining a subsurface velocity model, training a machine learning model using: at least a portion of the OBN seismic data as an input, and the sparse ULF seismic data as a training target, wherein the machine learning model is trained to enhance low-frequency content of the OBN seismic data based on the sparse ULF seismic data, generating enhanced seismic data by executing the trained machine learning model on the OBN seismic data to reconstruct ultra-low-frequency seismic components across the OBN seismic data, and performing full waveform inversion (FWI) using the enhanced seismic data to update the subsurface velocity model.

A second aspect of this disclosure pertains to the method of the first aspect, wherein the enhanced seismic data improves convergence or accuracy of the FWI.

A third aspect of this disclosure pertains to the method of the first aspect, wherein the enhanced seismic data provides low-frequency seismic content that improves stability or convergence of the FWI.

A fourth aspect of this disclosure pertains to the method of the first aspect, wherein the sparse ULF seismic data is sampled at less than ten percent of a shot density of the OBN seismic data.

A fifth aspect of this disclosure pertains to the method of the first aspect, wherein the training the machine learning model includes using the sparse ULF seismic data to guide reconstruction of ultra-low-frequency seismic components absent from the OBN seismic data.

A sixth aspect of this disclosure pertains to the method of the first aspect, wherein training the machine learning model includes iteratively refining reconstruction of ultra-low-frequency seismic components using the sparse ultra-low-frequency (ULF) seismic data.

A seventh aspect of this disclosure pertains to the method of the first aspect, wherein the training the machine learning model includes at least one of: a mean-teacher training approach in which a teacher model generates predictions used to supervise training of a student model, or cross-training a convolutional neural network and a transformer network using a consistency constraint between respective model outputs.

An eighth aspect of this disclosure pertains to one or more non-transitory computer-readable media storing instructions that, when executed by at least one processor of a computing system, cause the computing system to perform operations, the operations including: obtaining ocean bottom node (OBN) seismic data acquired using one or more seismic sources, obtaining sparse ultra-low-frequency (ULF) seismic data acquired using one or more specialized ULF seismic sources, the sparse ULF seismic data being sampled at a lower spatial or shot density than the OBN seismic data, obtaining a subsurface velocity model, training a machine learning model using: at least a portion of the OBN seismic data as an input, and the sparse ULF seismic data as a training target, wherein the machine learning model is trained to enhance low-frequency content of the OBN seismic data based on the sparse ULF seismic data, generating enhanced seismic data by executing the trained machine learning model on the OBN seismic data to reconstruct ultra-low-frequency seismic components across the OBN seismic data, and performing full waveform inversion (FWI) using the enhanced seismic data to update the subsurface velocity model.

A ninth aspect of this disclosure pertains to the one or more non-transitory computer-readable media of the eighth aspect, wherein the enhanced seismic data improves convergence or accuracy of the FWI.

A tenth aspect of this disclosure pertains to the one or more non-transitory computer-readable media of the eighth aspect, wherein the enhanced seismic data provides low-frequency seismic content that improves stability or convergence of the FWI.

An eleventh aspect of this disclosure pertains to the one or more non-transitory computer-readable media of the eighth aspect, wherein the sparse ULF seismic data is sampled at less than ten percent of a shot density of the OBN seismic data.

A twelfth aspect of this disclosure pertains to the one or more non-transitory computer-readable media of the eighth aspect, wherein the training the machine learning model includes: using the sparse ULF seismic data to guide reconstruction of ultra-low-frequency seismic components absent from the OBN seismic data, and iteratively refining reconstruction of ultra-low-frequency seismic components using the sparse ultra-low-frequency (ULF) seismic data.

A thirteenth aspect of this disclosure pertains to the one or more non-transitory computer-readable media of the eighth aspect, wherein the training the machine learning model includes at least one of: a mean-teacher training approach in which a teacher model generates predictions used to supervise training of a student model, or cross-training a convolutional neural network and a transformer network using a consistency constraint between respective model outputs.

A fourteenth aspect of this disclosure pertains to a system, including: one or more processors, and at least one memory including at least one non-transitory computer-readable medium storing instructions that, when executed by at least one of the one or more processors, cause the system to perform operations, the operations including: obtaining ocean bottom node (OBN) seismic data acquired using one or more seismic sources, obtaining sparse ultra-low-frequency (ULF) seismic data acquired using one or more specialized ULF seismic sources, the sparse ULF seismic data being sampled at a lower spatial or shot density than the OBN seismic data, obtaining a subsurface velocity model, training a machine learning model using: at least a portion of the OBN seismic data as an input, and the sparse ULF seismic data as a training target, wherein the machine learning model is trained to enhance low-frequency content of the OBN seismic data based on the sparse ULF seismic data, generating enhanced seismic data by executing the trained machine learning model on the OBN seismic data to reconstruct ultra-low-frequency seismic components across the OBN seismic data, and performing full waveform inversion (FWI) using the enhanced seismic data to update the subsurface velocity model.

A fifteenth aspect of this disclosure pertains to the system of the fourteenth aspect, wherein the enhanced seismic data improves convergence or accuracy of the FWI.

A sixteenth aspect of this disclosure pertains to the system of the fourteenth aspect, wherein the enhanced seismic data provides low-frequency seismic content that improves stability or convergence of the FWI.

A seventeenth aspect of this disclosure pertains to the system of the fourteenth aspect, wherein the sparse ULF seismic data is sampled at less than ten percent of a shot density of the OBN seismic data.

An eighteenth aspect of this disclosure pertains to the system of the fourteenth aspect, wherein the training the machine learning model includes using the sparse ULF seismic data to guide reconstruction of ultra-low-frequency seismic components absent from the OBN seismic data.

A nineteenth aspect of this disclosure pertains to the system of the fourteenth aspect, wherein training the machine learning model includes iteratively refining reconstruction of ultra-low-frequency seismic components using the sparse ultra-low-frequency (ULF) seismic data.

A twentieth aspect of this disclosure pertains to the system of the fourteenth aspect, wherein the training the machine learning model includes at least one of: a mean-teacher training approach in which a teacher model generates predictions used to supervise training of a student model, or cross-training a convolutional neural network and a transformer network using a consistency constraint between respective model outputs.

This summary is provided to introduce a selection of concepts that are further described below in the detailed description. This summary is not intended to identify key or essential features of the claimed subject matter, nor is it intended to be used as an aid in limiting the scope of the claimed subject matter.

Additional features and advantages of embodiments of the disclosure will be set forth in the description that follows, and in part will be obvious from the description, or may be learned by the practice of such embodiments. The features and advantages of such embodiments may be realized and obtained by means of the instruments and combinations particularly pointed out in the appended claims. These and other features will become more fully apparent from the following description and appended claims or may be learned by the practice of such embodiments as set forth hereinafter.

### BRIEF DESCRIPTION OF DRAWINGS

To describe the manner in which the above-recited and other features of the disclosure can be obtained, a more particular description will be rendered by reference to specific implementations thereof, which are illustrated in the appended drawings. For better understanding, like elements have been designated by like reference numbers throughout the various accompanying figures. While some of the drawings may be schematic or exaggerated representations of concepts, at least some of the drawings may be drawn to scale. Understanding that the drawings depict some example implementations, the implementations will be described and explained with additional specificity and detail through the use of the accompanying drawings.
FIG. 1A depicts an example computing system.
FIGs. 1B-1E are schematic views of example oilfields.
FIGs. 2-3 are schematic views of example oilfields.
FIG. 4 is a schematic depiction of an example survey area showing example locations of ultra-low-frequency (ULF) source sampling and low-frequency (LF) source sampling.
FIG. 5 is a schematic depiction of an example survey area showing example locations of ULF source sampling and LF source sampling.
FIG. 6 is an example workflow for training a machine learning model.
FIG. 7 is an example workflow for ULF data integration and iterative training.
FIG. 8 is an example workflow for self-supervised learning.
FIG. 9 is a workflow for an example mean teacher training approach.
FIG. 10 is a workflow for an example convolutional neural network (CNN)-Transformer cross-training approach.
FIG. 11 is a flowchart for an example method.
FIG. 12 illustrates certain components that may be included within a computer system according to an example embodiment of the present disclosure.

Before explaining the disclosed embodiment of this disclosure in detail, it is to be understood that the disclosure is not limited in its application to the details of the particular arrangement shown, as the disclosure is capable of other embodiments. Example embodiments are illustrated in referenced figures of the drawings. It is intended that the embodiments and figures disclosed herein are to be considered illustrative rather than limiting. Also, the terminology used herein is for the purpose of description and not of limitation.

### DETAILED DESCRIPTION

While the subject disclosure applies to embodiments in many different forms, specific embodiments are shown in the drawings and will be described in detail herein with the understanding that the present disclosure is an example of the principles of the disclosure. It is not intended to limit the disclosure to the specific illustrated embodiments. The features of the disclosure herein, in the description, drawings, and claims, can be significant, both individually and in any desired combinations, for the operation of the disclosure in its various embodiments. Features from one embodiment can be used in other embodiments of the disclosure. In the description of the drawings, like reference numerals refer to like elements.

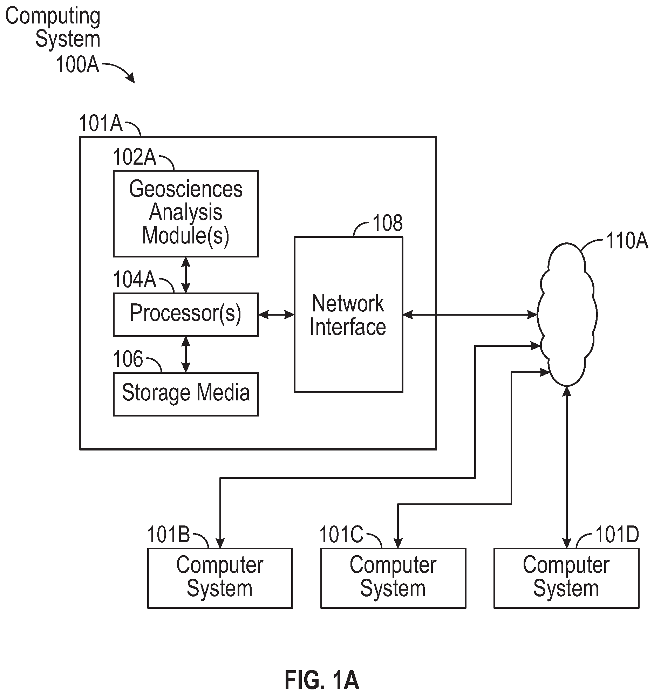

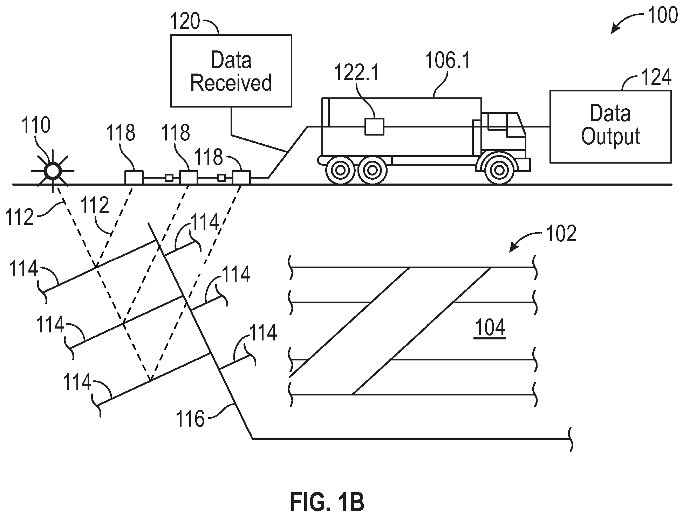

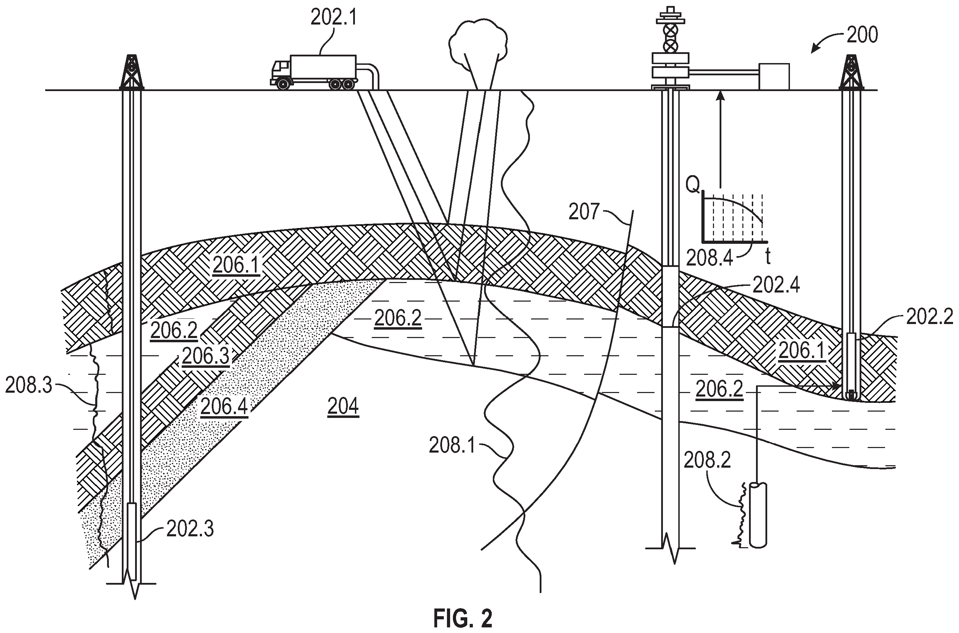

FIG. 1A depicts an example computing system. FIGs. 1B-1E are schematic views of example oilfields. FIGs. 2-3 are schematic views of example oilfields.

FIG. 1A depicts an example computing system 100A in accordance with some embodiments. The computing system 100A can be an individual computer system 101A or an arrangement of distributed computer systems. The computer system 101A includes one or more geosciences analysis modules 102A that are configured to perform various tasks according to some embodiments, such as one or more methods disclosed herein. In some embodiments, the geosciences analysis modules 102A may take the form of a sustainability analysis module. To perform these various tasks, a geosciences analysis module 102A may execute independently or in coordination with one or more processors 104A, which may be connected to one or more storage media 106. The processor(s) 104A may also be connected to a network interface 108 to allow the computer system 101A to communicate over a data network 110A with one or more additional computer systems and/or computing systems, such as 101B, 101C, and/or 101D (note that computer systems 101B, 101C, and/or 101D may or may not share the same architecture as computer system 101A, and may be located in different physical locations, e.g., computer systems 101A and 101B may be on a ship underway on the ocean, while in communication with one or more computer systems such as 101C and/or 101D that are located in one or more data centers on shore, other ships, and/or located in varying countries on different continents). Note that data network 110A may be a private network, it may use portions of public networks, it may include remote storage and/or applications processing capabilities (e.g., cloud computing).

A processor can include a microprocessor, microcontroller, processor module or subsystem, programmable integrated circuit, programmable gate array, or another control or computing device. The processor may be implemented as a single processor or as multiple processors or subprocessors.

The storage media 106 can be implemented as one or more computer-readable or machine-readable storage media. Note that, while in the example embodiment of FIG. 1A, storage media 106 is depicted as within computer system 101A, in some embodiments, storage media 106 may be distributed within and/or across multiple internal and/or external enclosures of computing system 101A and/or additional computing systems. Storage media 106 may include one or more different forms of memory, including semiconductor memory devices such as dynamic or static random access memories (DRAMs or SRAMs), erasable and programmable read-only memories (EPROMs), electrically erasable and programmable read-only memories (EEPROMs), and flash memories; magnetic disks such as fixed, floppy, and removable disks; other magnetic media, including tape; optical media such as compact disks (CDs) or digital video disks (DVDs), BLURAY^{®}, or any other type of optical media; or other types of storage devices. Note that the instructions discussed above can be provided on one computer-readable or machine-readable storage medium, or alternatively, can be provided on multiple computer-readable or machine-readable storage media distributed in a large system having possibly plural nodes and/or non-transitory storage means. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

It should be appreciated that computer system 101A is one example of a computing system, and that computer system 101A may have more or fewer components than shown, may combine additional components not depicted in the example embodiment of FIG. 1A, and/or computer system 101A may have a different configuration or arrangement of the components depicted in FIG. 1A. The various components shown in FIG. 1A may be implemented in hardware, software, or a combination of both, hardware and software, including one or more signal processing and/or application-specific integrated circuits.

It should also be appreciated that while no user input/output peripherals are illustrated with respect to computer systems 101A, 101B, 101C, and 101D, many embodiments of computing system 100A include computer systems with keyboards, mice, touch screens, displays, etc. Some computer systems in use in computing system 100A may be desktop workstations, laptops, tablet computers, smartphones, server computers, etc.

Further, the steps in the processing methods described herein may be implemented by running one or more functional modules in information processing apparatus such as general-purpose processors or application-specific chips, such as ASICs, FPGAs, PLDs, or other appropriate devices. These modules, combinations of these modules, and/or their combination with general hardware are included within the scope of protection.

FIGs. 1B-1E illustrate simplified, schematic views of an example oilfield 100 having a subterranean formation 102 containing reservoir 104 therein in accordance with implementations of various technologies and techniques described herein.

FIG. 1B illustrates a survey operation being performed by a survey tool, such as seismic truck 106.1, to measure properties of the subterranean formation. The survey operation is a seismic survey operation for producing sound vibrations. In FIG. 1B, one such sound vibration, e.g., sound vibration 112 generated by source 110, reflects off horizons 114 in earth formation 116. A set of sound vibrations is received by sensors, such as geophone-receivers 118, situated on the earth's surface. The data received 120 is provided as input data to a computer 122.1 of a seismic truck 106.1, and responsive to the input data, computer 122.1 generates seismic data output 124. This seismic data output may be stored, transmitted, or further processed as desired, for example, by data reduction.

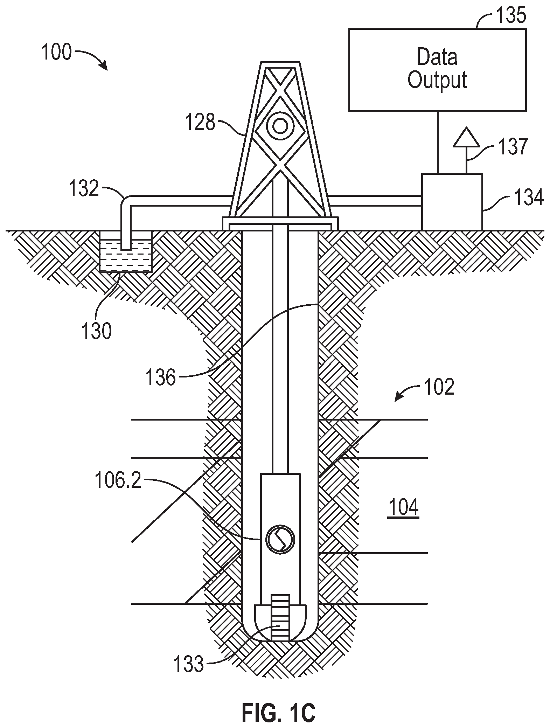

FIG. 1C illustrates a drilling operation being performed by drilling tools 106.2 suspended by rig 128 and advanced into subterranean formations 102 to form wellbore 136. Mud pit 130 is used to draw drilling mud into the drilling tools via flow line 132 for circulating drilling mud down through the drilling tools, then up wellbore 136 and back to the surface. The drilling mud is typically filtered and returned to the mud pit. A circulating system may be used for storing, controlling, or filtering the flowing drilling mud. The drilling tools are advanced into subterranean formations 102 to reach reservoir 104. Each well may target one or more reservoirs. The drilling tools are adapted for measuring downhole properties using logging while drilling tools. The logging while drilling tools may also be adapted for taking core sample 133 as shown.

Computer facilities may be positioned at various locations about the oilfield 100 (e.g., the surface unit 134) and/or at remote locations. Surface unit 134 may be used to communicate with the drilling tools and/or offsite operations, as well as with other surface or downhole sensors. Surface unit 134 is capable of communicating with the drilling tools to send commands to the drilling tools, and to receive data therefrom. Surface unit 134 may also collect data generated during the drilling operation and produce data output 135, which may then be stored or transmitted.

Sensors (S), such as gauges, may be positioned about oilfield 100 to collect data relating to various oilfield operations as described previously. As shown, one or more sensors (S) may be positioned in one or more locations in the drilling tools and/or at rig 128 to measure drilling parameters, such as weight on bit, torque on bit, pressures, temperatures, flow rates, compositions, rotary speed, and/or other parameters of the field operation. Additional one or more sensors (S) may also be positioned in one or more locations in the circulating system.

Drilling tools 106.2 may include a bottom hole assembly (BHA) (not shown), generally referenced, near the drill bit (e.g., within several drill collar lengths from the drill bit). The bottom hole assembly includes capabilities for measuring, processing, and storing information, as well as communicating with surface unit 134. The bottom hole assembly further includes drill collars for performing various other measurement functions.

The bottom hole assembly may include a communication subassembly that communicates with surface unit 134. The communication subassembly is adapted to send signals to and receive signals from the surface using a communications channel such as mud pulse telemetry, electromagnetic telemetry, or wired drill pipe communications. The communication subassembly may include, for example, a transmitter that generates a signal, such as an acoustic or electromagnetic signal, which is representative of the measured drilling parameters. It will be appreciated by one of skill in the art that a variety of telemetry systems may be employed, such as wired drill pipe, electromagnetic, or other known telemetry systems.

Typically, the wellbore is drilled according to a drilling plan that is established prior to drilling. The drilling plan typically sets forth equipment, pressures, trajectories, and/or other parameters that define the drilling process for the wellsite. The drilling operation may then be performed according to the drilling plan. However, as information is gathered, the drilling operation may need to deviate from the drilling plan. Additionally, as drilling or other operations are performed, the subsurface conditions may change. The earth model may also need adjustment as new information is collected.

The data gathered by any of the one or more sensors (S) may be collected by surface unit 134 and/or other data collection sources for analysis or other processing. The data collected by sensors (S) may be used alone or in combination with other data. The data may be collected in one or more databases and/or transmitted on or offsite. The data may be historical data, real-time data, or combinations thereof. The real-time data may be used in real time, or stored for later use. The data may also be combined with historical data or other inputs for further analysis. The data may be stored in separate databases or combined into a single database.

Surface unit 134 may include transceiver 137 to allow communications between surface unit 134 and various portions of the oilfield 100 or other locations. Surface unit 134 may also be provided with or functionally connected to one or more controllers (not shown) for actuating mechanisms at oilfield 100. Surface unit 134 may then send command signals to oilfield 100 in response to data received. Surface unit 134 may receive commands via transceiver 137 or may itself execute commands to the controller. A processor may be provided to analyze the data (locally or remotely), make decisions, and/or actuate the controller. In this manner, oilfield 100 may be selectively adjusted based on the data collected. This technique may be used to optimize (or improve) portions of the field operation, such as controlling drilling, weight on bit, pump rates, or other parameters. These adjustments may be made automatically based on computer protocol, and/or manually by an operator. In some cases, well plans may be adjusted to select optimum (or improved) operating conditions, or to avoid problems.

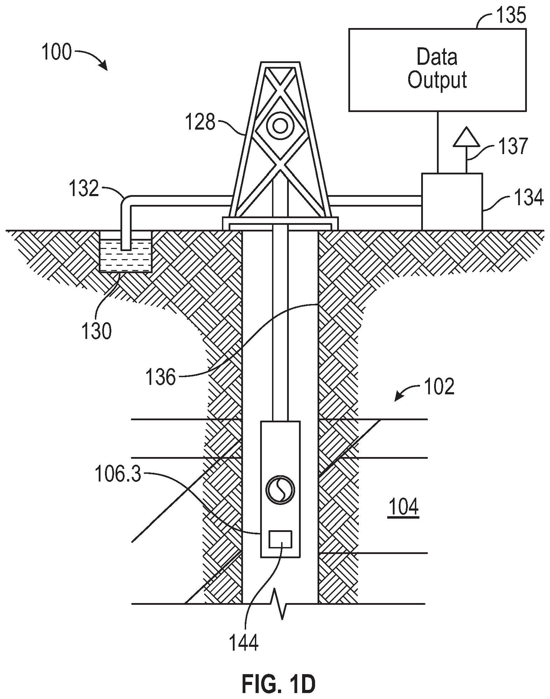

FIG. 1D illustrates a wireline operation being performed by wireline tool 106.3 suspended by rig 128 and into wellbore 136 of FIG. 1C. Wireline tool 106.3 is adapted for deployment into wellbore 136 for generating well logs, performing downhole tests, and/or collecting samples. Wireline tool 106.3 may be used to provide another method and apparatus for performing a seismic survey operation. Wireline tool 106.3 may, for example, have an explosive, radioactive, electrical, or acoustic energy source 144 that sends and/or receives electrical signals to surrounding subterranean formations 102 and fluids therein.

Wireline tool 106.3 may be operatively connected to, for example, geophones 118 and a computer 122.1 of a seismic truck 106.1 of FIG. 1B. Wireline tool 106.3 may also provide data to surface unit 134. Surface unit 134 may collect data generated during the wireline operation and may produce data output 135 that may be stored or transmitted. Wireline tool 106.3 may be positioned at various depths in the wellbore 136 to provide a survey or other information relating to the subterranean formation 102.

Sensors (S), such as gauges, may be positioned about oilfield 100 to collect data relating to various field operations as described previously. As shown, sensor S is positioned in wireline tool 106.3 to measure downhole parameters which relate to, for example, porosity, permeability, fluid composition, and/or other parameters of the field operation.

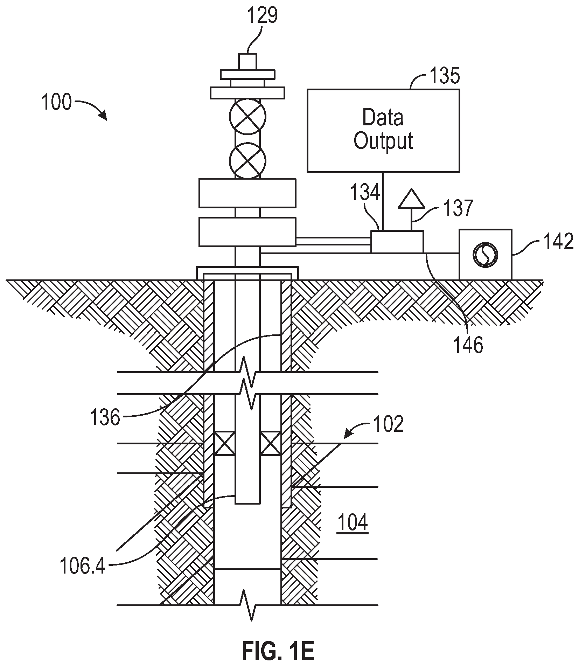

FIG. 1E illustrates a production operation being performed by production tool 106.4 deployed from a production unit or Christmas tree 129 and into completed wellbore 136 for drawing fluid from the downhole reservoirs into surface facilities 142. The fluid flows from reservoir 104 through perforations in the casing (not shown) and into production tool 106.4 in wellbore 136 and to surface facilities 142 via gathering network 146.

Sensors (S), such as gauges, may be positioned about oilfield 100 to collect data relating to various field operations as described previously. As shown, the sensor (S) may be positioned in production tool 106.4 or associated equipment, such as Christmas tree 129, gathering network 146, surface facility 142, and/or the production facility, to measure fluid parameters, such as fluid composition, flow rates, pressures, temperatures, and/or other parameters of the production operation.

Production may also include injection wells for added recovery. One or more gathering facilities may be operatively connected to one or more of the wellsites for selectively collecting downhole fluids from the wellsite(s).

While FIGs. 1C-1E illustrate tools used to measure properties of an oilfield, it will be appreciated that the tools may be used in connection with non-oilfield operations, such as gas fields, mines, aquifers, storage, or other subterranean facilities. Also, while certain data acquisition tools are depicted, it will be appreciated that various measurement tools capable of sensing parameters, such as seismic two-way travel time, density, resistivity, production rate, etc., of the subterranean formation and/or its geological formations may be used. Various sensors (S) may be located at various positions along the wellbore and/or the monitoring tools to collect and/or monitor the desired data. Other sources of data may also be provided from offsite locations.

The field configurations of FIGs. 1B-1E are intended to provide a brief description of an example of a field usable with oilfield application frameworks. Part of, or the entirety, of the oilfield 100 may be on land, water, and/or sea. Also, while a single field measured at a single location is depicted, oilfield applications may be utilized with any combination of one or more oilfields, one or more processing facilities, and/or one or more wellsites.

FIG. 2 illustrates a schematic view, partially in cross-section, of oilfield 200 having data acquisition tools 202.1, 202.2, 202.3, and 202.4 positioned at various locations along oilfield 200 for collecting data of subterranean formation 204 in accordance with implementations of various technologies and techniques described herein. Data acquisition tools 202.1-202.4 may be the same as data acquisition tools 106.1-106.4 of FIGs. 1B-1E, respectively, or others not depicted. As shown, data acquisition tools 202.1-202.4 generate data plots or measurements 208.1-208.4, respectively. These data plots are depicted along oilfield 200 to demonstrate the data generated by the various operations.

Data plots 208.1-208.3 are examples of static data plots that may be generated by data acquisition tools 202.1-202.3, respectively; however, it should be understood that data plots 208.1-208.3 may also be data plots that are updated in real time. These measurements may be analyzed to better define the properties of the formation(s) and/or determine the accuracy of the measurements and/or for checking for errors. The plots of each of the respective measurements may be aligned and scaled for comparison and verification of the properties.

Static data plot 208.1 is a seismic two-way response over a period of time. Static plot 208.2 is core sample data measured from a core sample of the formation 204. The core sample may be used to provide data, such as a graph of the density, porosity, permeability, or some other physical property of the core sample over the length of the core. Tests for density and viscosity may be performed on the fluids in the core at varying pressures and temperatures. Static data plot 208.3 is a logging trace that typically provides a resistivity or other measurement of the formation at various depths.

A production decline curve or graph 208.4 is a dynamic data plot of the fluid flow rate over time. The production decline curve typically provides the production rate as a function of time. As the fluid flows through the wellbore, measurements are taken of fluid properties, such as flow rates, pressures, composition, etc.

Other data may also be collected, such as historical data, user inputs, economic information, and/or other measurement data and other parameters of interest. As described below, the static and dynamic measurements may be analyzed and used to generate models of the subterranean formation to determine characteristics thereof. Similar measurements may also be used to measure changes in formation aspects over time.

The subterranean formation 204 has a plurality of geological formations 206.1-206.4. As shown, this structure has several formations or layers, including a shale layer 206.1, a carbonate layer 206.2, a shale layer 206.3, and a sand layer 206.4. A fault 207 extends through the shale layer 206.1 and the carbonate layer 206.2. The static data acquisition tools are adapted to take measurements and detect characteristics of the formations.

While a specific subterranean formation with specific geological structures is depicted, it will be appreciated that oilfield 200 may contain a variety of geological structures and/or formations, sometimes having extreme complexity. In some locations, typically below the water line, fluid may occupy pore spaces of the formations. Each of the measurement devices may be used to measure properties of the formations and/or its geological features. While each acquisition tool is shown as being in specific locations in oilfield 200, it will be appreciated that one or more types of measurement may be taken at one or more locations across one or more fields or other locations for comparison and/or analysis.

The data collected from various sources, such as the data acquisition tools of FIG. 2, may then be processed and/or evaluated. Typically, seismic data displayed in static data plot 208.1 from data acquisition tool 202.1 is used by a geophysicist to determine characteristics of the subterranean formations and features. The core data shown in static plot 208.2 and/or log data from well log 208.3 are typically used by a geologist to determine various characteristics of the subterranean formation. The production data from graph 208.4 is typically used by the reservoir engineer to determine fluid flow reservoir characteristics. The data analyzed by the geologist, geophysicist, and/or the reservoir engineer may be analyzed using modeling techniques.

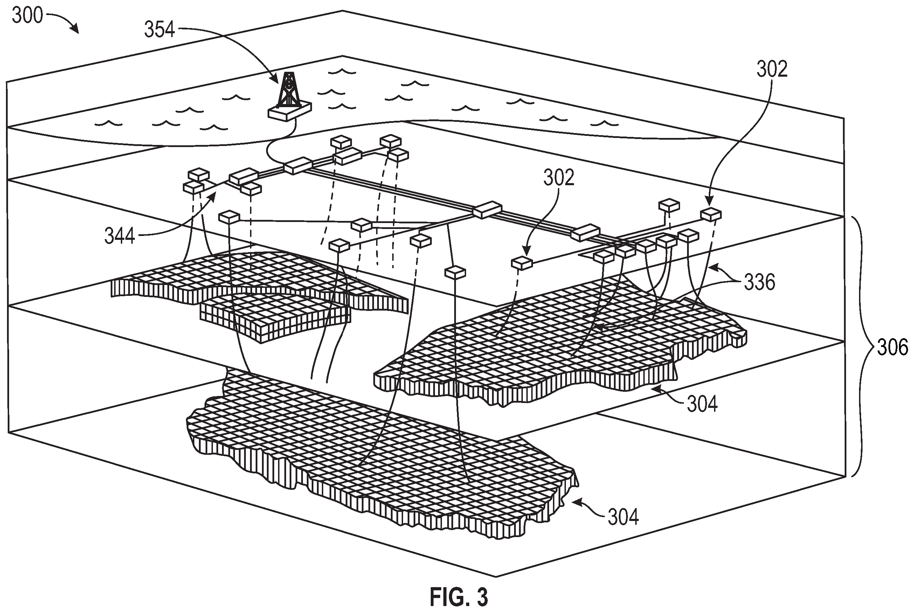

FIG. 3 illustrates an oilfield 300 for performing production operations in accordance with implementations of various technologies and techniques described herein. As shown, the oilfield has a plurality of wellsites 302 operatively connected to a central processing facility 354. The oilfield configuration of FIG. 3 is not intended to limit the scope of the oilfield application system. Part, or all, of the oilfield may be on land and/or at sea. Also, while a single oilfield with a single processing facility and a plurality of wellsites is depicted, any combination of one or more oilfields, one or more processing facilities, and one or more wellsites may be present.

Each wellsite 302 has equipment that forms a wellbore 336 into the earth. The wellbores extend through subterranean formations 306, including reservoirs 304. These reservoirs 304 contain fluids, such as hydrocarbons. The wellsites draw fluid from the reservoirs and pass them to the processing facilities via surface networks 344. The surface networks 344 have tubing and control mechanisms for controlling the flow of fluids from the wellsite to the processing facility 354.

Attention is now directed to methods, techniques, and workflows for planning, forecasting, and/or optimizing production-related systems (e.g., model selections, reservoir maps, wells, etc.) in accordance with some embodiments. Some operations in the processing procedures, methods, techniques, and workflows disclosed herein may be combined and/or the order of some operations may be changed. Those with skill in the art will recognize that in the geosciences and/or other multi-dimensional data processing disciplines, various interpretations, sets of assumptions, and/or domain models, such as velocity models, may be refined in an iterative fashion; this concept is applicable to the procedures, methods, techniques, and workflows as discussed herein. This iterative refinement can include use of feedback loops executed on an algorithmic basis, such as at a computing device (e.g., computing system 100A, FIG. 1A), and/or through manual control by a user who may make determinations regarding whether a given step, operation, action, template, or model has become sufficiently accurate.

The push for ultra-low-frequency (ULF) content in seismic acquisition has led to industry innovations engineered to generate energy well below 2 Hertz (Hz). These sources have proven valuable for Full Waveform Inversion (FWI) success, especially in sparse ocean bottom node (OBN) surveys targeting complex geological settings, such as the Gulf of Mexico (or Gulf of America). By enhancing ULF signal-to-noise ratios and supporting ultra-long offsets, tools, which may include specially-designed low-frequency sources (e.g., TUNED PULSE SOURCETM (TPSTM)), enable diving waves to penetrate deeper, enhancing the ability to resolve low-wavenumber velocity features critical for model accuracy. However, these specialized sources are costly, which limits their implementation in the field at scale. As a result, operators often combine sparse OBN data with existing dense streamer surveys or denser conventional source OBN surveys, for example, using a staged or joint FWI approach. This hybrid strategy maximizes the strengths of both datasets, ULF, full-azimuth data from specially designed ULF source OBN, and low-frequency full-azimuth denser conventional source OBN surveys, or high-frequency resolution from streamers, allowing elastic FWI to deliver sharper, deeper, and more reliable subsurface images while balancing cost and coverage.

Recent breakthroughs in machine learning (ML) are transforming how the seismic industry addresses low-frequency signal challenges in FWI. Self-supervised learning (SSL) has emerged as a powerful alternative to supervised methods, which rely on scarce clean low-frequency labels. Instead, SSL generates pseudo-labels directly from noisy field data, making it especially valuable for ocean bottom node (OBN) surveys where signals below 2 Hz are often contaminated by noise.

In the disclosed technique, e.g., a computer-implemented technique, two advanced SSL frameworks that significantly enhance ULF content may be utilized. The first SSL framework may employ a "mean-teacher" strategy that improves pseudo-label accuracy and training stability, enhancing extrapolated data's physical reliability and impact on velocity model updates. The second SSL framework may use a novel convolutional neural network (CNN)-Transformer co-training (or cross-training) scheme, merging the local feature strength of CNNs with the global context modeling of transformers. This hybrid method may produce coherent, physics-consistent ULF events that improve signal resolution, for example, down to about 0.5 Hz, and may match the quality of data acquired using costly sources, such as TPS^{™}.

This new hybrid cost-effective survey design combines conventional OBN acquisition with a sparsely sampled ULF survey using specialized low-frequency sources, e.g., a TPS source, or other specially-designed low-frequency sources. Conventional OBN acquisition and ULF survey can be acquired either separately or jointly, including using low-frequency sources on the same source boats as conventional sources. These high-cost ULF sources can be deployed on their own grid covering a full survey or at only a fraction, e.g., just a few percent, of the conventional shot density. The resulting sparse ULF data may serve as the training target for a machine learning model, which may learn to enhance or reconstruct low-frequency content in conventional source data collected nearby. Once trained and validated, the model may be applied across the full conventional OBN dataset to extrapolate ultra-low-frequency information survey-wide. This hybrid design may deliver robust ULF enhancement with minimal additional acquisition cost, leveraging ML to scale the value of limited high-quality ULF data across the entire survey.

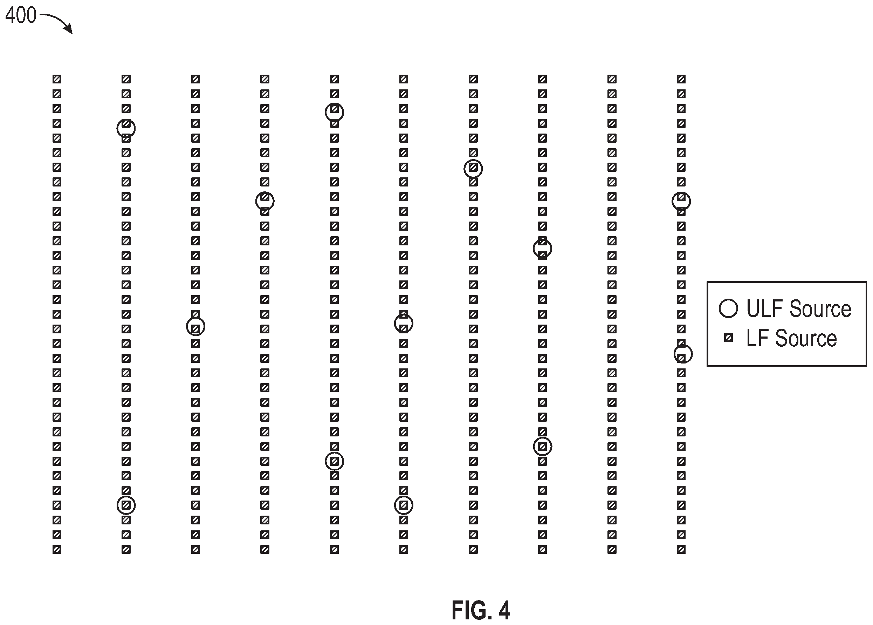

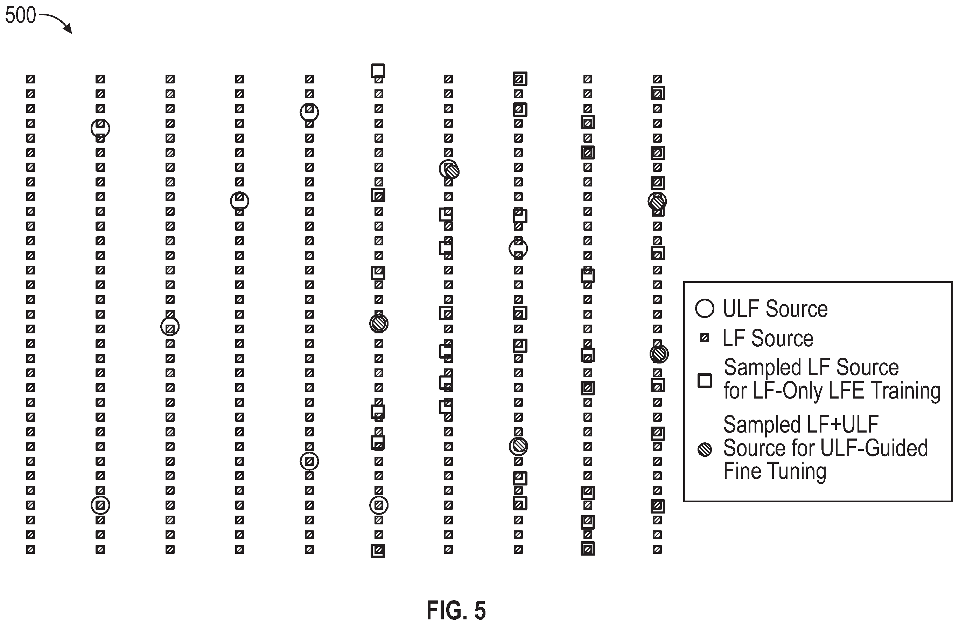

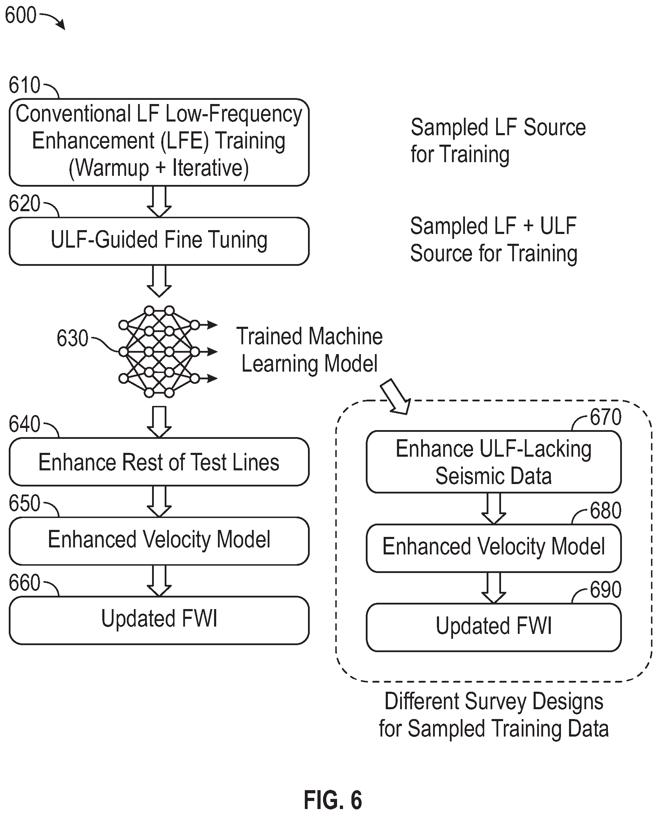

FIG. 4 is a schematic depiction of an example survey area showing example locations of ultra-low-frequency (ULF) source sampling and low-frequency (LF) source sampling. FIG. 5 is a schematic depiction of an example survey area showing example locations of ULF source sampling and LF source sampling. FIG. 6 is an example workflow for training a machine learning model.

FIG. 4 illustrates an example survey area 400 in which an acquisition design uses both ULF and LF combined such that a conventional LF source and a sparsely sampled ULF source provide samples over the example survey area 400. As shown, the LF source may be sampled frequently and usually at regular intervals across the entirety of the example survey area 400. In contrast, the sparsely sampled ULF source may be sampled at irregular intervals across the example survey area 400 and far less frequently than the LF source. FIG. 5 illustrates an example survey area 500, which may be the same as or similar to the example survey area 400 of FIG. 4, in which some of the LF and ULF samples are selected for training. For example, some sampled LF sources may be selected for LF-only low-frequency enhancement (LFE) training of a machine learning model. Some LF and ULF samples that overlap may be selected for ULF-guided fine-tuning of the trained machine learning model.

As illustrated in FIG. 4, an example overall workflow for the survey area 400 may include acquiring OBN seismic data using one or more seismic sources and acquiring sparse ULF seismic data using one or more specialized ULF seismic sources. The sparse ULF seismic data may be sampled at a lower spatial or shot density than the OBN seismic data, for example at a small fraction of the shot density. An initial subsurface velocity model may be obtained prior to inversion, such as from prior seismic processing, tomography, or legacy velocity models. The workflow may include training a machine learning model, generating enhanced seismic data with reconstructed ultra-low-frequency components, and performing FWI to generate an updated subsurface velocity model.

FIG. 5 illustrates that the trained machine learning model may be applied to OBN seismic data that lacks ultra-low-frequency content, thereby enhancing seismic data across portions of the OBN dataset that were not directly associated with sparse ULF seismic measurements. In some embodiments, the trained machine learning model may be applied to multiple test lines or datasets to generate enhanced seismic data suitable for inversion.

FIG. 6 illustrates an example workflow 600 in which the trained machine learning model may be applied beyond the subset of data used for training. Conventional LF LFE training data, e.g., warm-up data and iterative training data, may be obtained, for example, from a sampled LF source for training at 610 for training a machine learning (ML) model. At 620, data from sampled LF and ULF sources may be used for ULF-guided fine-tuning of the ML model. The trained ML model 630 may be used, for example, to enhance the rest of the test lines where direct data may not be available at 640. Then, an enhanced subsurface velocity model may be generated or an initial subsurface velocity model may be updated at 650. An updated FWI may then be generated at 660. The trained ML model 630 may also be used, for example, to enhance seismic data where ULF data is lacking at 670. Then, an enhanced subsurface velocity model may be generated or an initial subsurface velocity model may be updated at 680. An updated FWI may then be generated at 690. Different survey designs may be used to sample training data.

In some embodiments, enhanced seismic data may be generated for additional OBN seismic datasets, including datasets from different surveys or datasets for which little or no ULF seismic data was acquired. Example embodiments may enable extrapolation of ultra-low-frequency seismic information across broader spatial extents using a limited amount of sparse ULF seismic data.

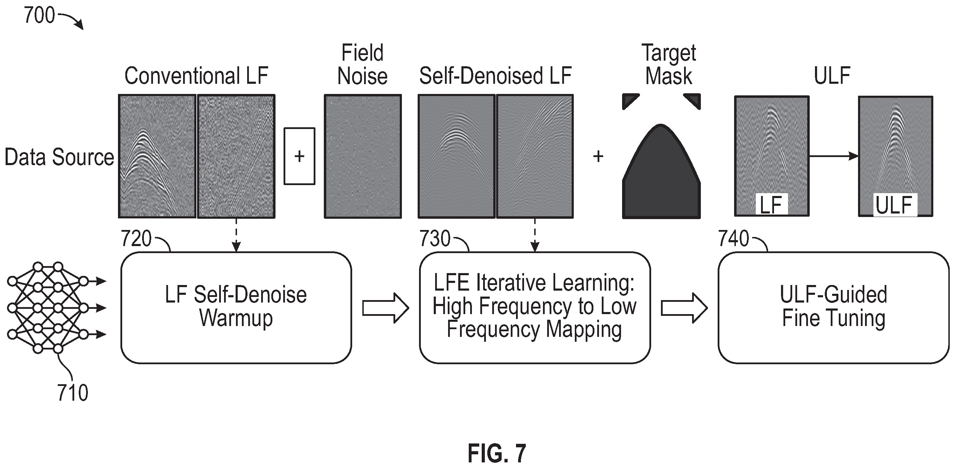

FIG. 7 is an example workflow for ULF data integration and iterative training.

As illustrated in FIG. 7, in an example workflow 700, training of a machine learning model 710 may include integration of sparse ULF seismic data with OBN seismic data. In some embodiments, the training process may include a warm-up or self-denoising stage 720 followed by iterative low-frequency enhancement stages. During these stages, the machine learning model 710 may learn a mapping from higher-frequency seismic components to lower-frequency or ultra-low-frequency seismic components at 730. The machine learning model 710 may be fine-tuned by using the ULF data as a guide at 740. The sparse ULF seismic data may be sampled at less than ten percent of the shot density of the OBN seismic data, while still providing sufficient information to guide training and refinement of the machine learning model 710.

In an experimental example, about 20,000 ULF shots were sampled for a preliminary training experiment, which was <10% of all ULF shots from a TPS^{™}. Quality control showed that the sampled shots were effective for LFE for the rest of the test line. Example embodiments may be generalizable to other surveys and survey designs.

In some examples, data may be available with samples at about 2 Hz ~ 10 Hz. Data from about 6 Hz ~ 10 Hz may be used as training data, and 2 Hz ~ 10 Hz may be the target.

Example embodiments may employ training strategies that transition from supervised learning to self-supervised learning. In such embodiments, clean seismic data or higher-frequency seismic data, which may be even cleaner, may be used during an initial training stage, while later stages may rely on pseudo-labels generated by the machine learning model itself. This approach may reduce reliance on densely sampled ultra-low-frequency targets that are often unavailable or contaminated by acquisition noise in field data. For example, it is possible to learn to restore images, e.g., at low frequency, by only looking at corrupted examples, e.g., at high frequency, at performance at, and sometimes exceeding, training using clean data, without explicit image priors or likelihood models of the corruption. For example, for a set of input-target pairs (*xᵢ, yᵢ*), the following Equation 1 may be applied.

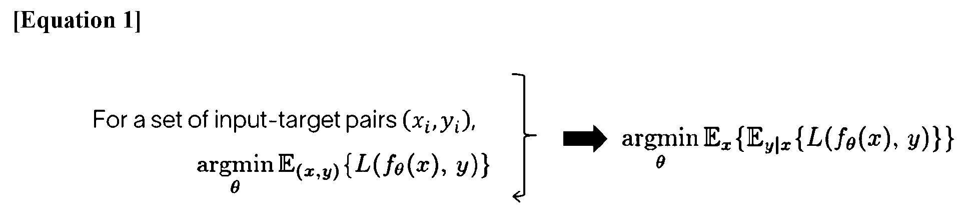

In Equation 1, *i* is an instance, x and y respectively represent an input and a target, θ is a network parameter, ${E}_{\left(x, y\right)}$ represents supervised learning, {*L*(*f*_{θ}(*x*), *y*)} is a loss function, ${E}_{x}$ represents self-supervised (or unsupervised) learning, and ${E}_{\left.y\right| x}$ represents a generative operation.

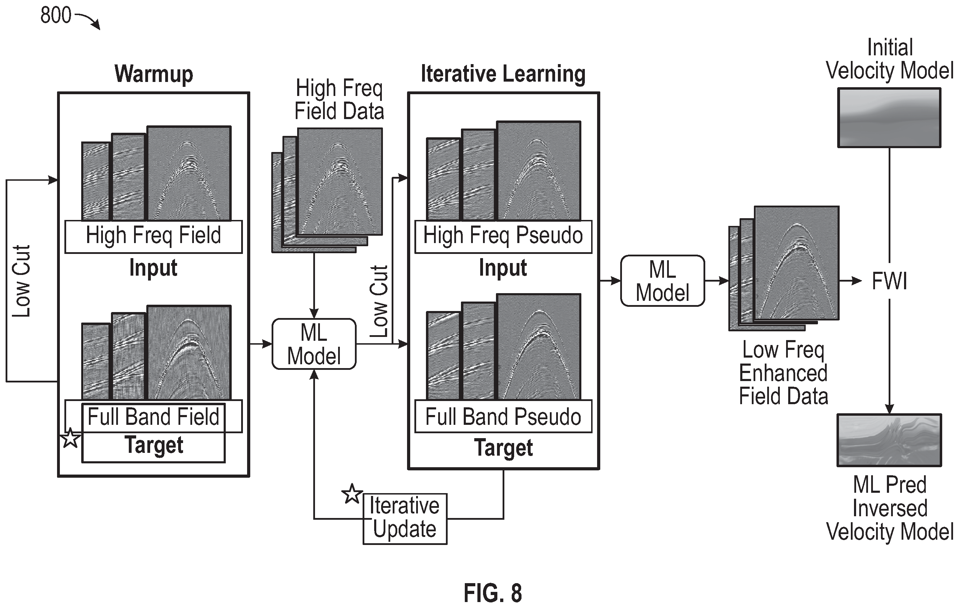

FIG. 8 is an example workflow for self-supervised learning.

As illustrated in FIG. 8, an example self-supervised learning workflow 800 may utilize existing low-frequency sources to iteratively enhance low-frequency signals. The example workflow 800 may include providing OBN seismic data as an input to a machine learning model and iteratively refining reconstructed low-frequency seismic components. In some embodiments, reconstructed seismic outputs generated during one iteration may be used as updated training targets in subsequent iterations. This iterative refinement may progressively improve the quality and physical consistency of reconstructed ultra-low-frequency seismic components. The workflow may include generating enhanced seismic data that is subsequently used in FWI together with an initial subsurface velocity model to generate an updated subsurface velocity model.

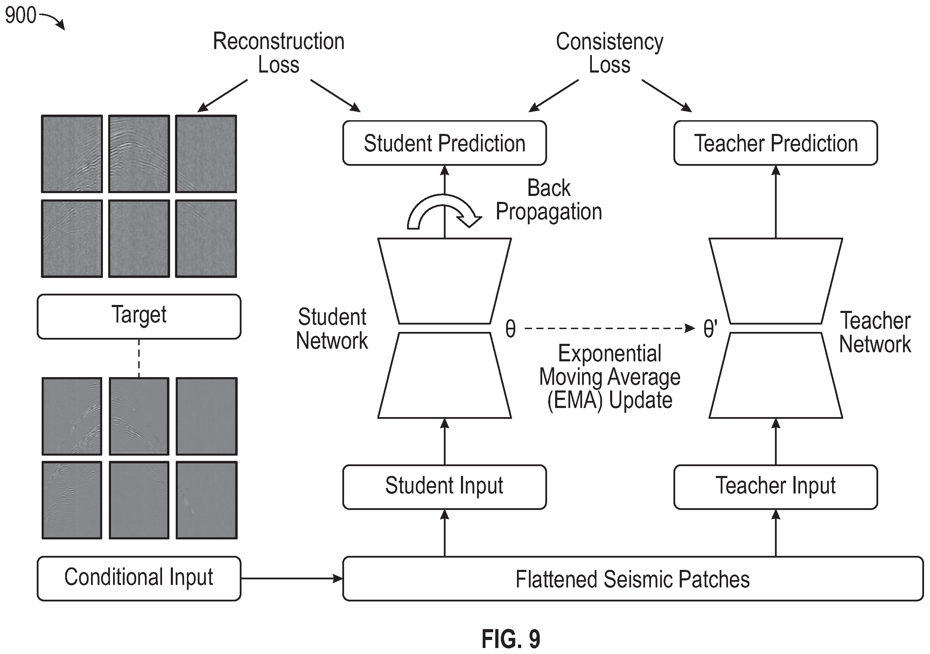

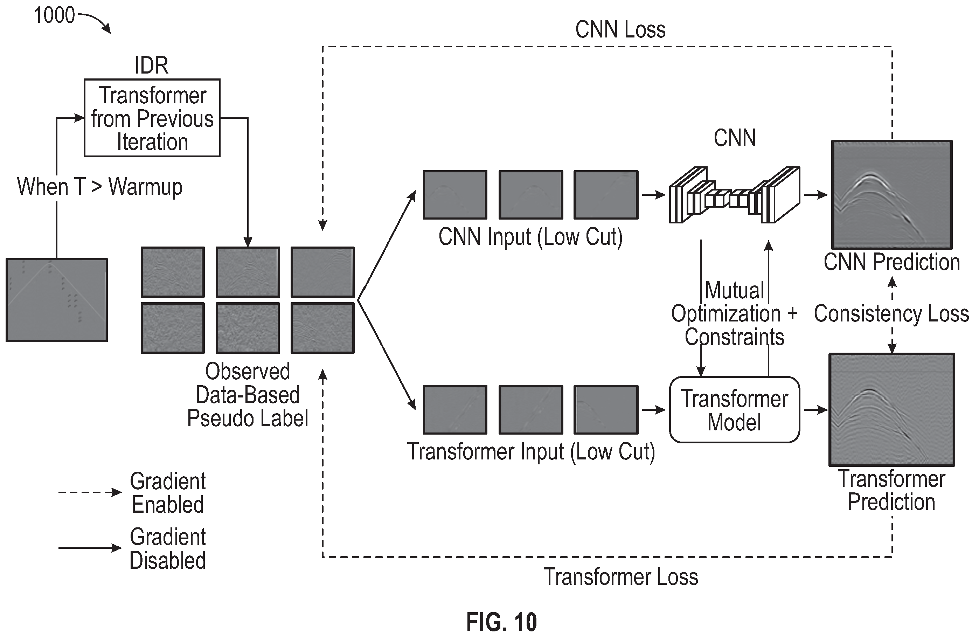

FIG. 9 is a workflow for an example mean teacher training approach. FIG. 10 is a workflow for an example convolutional neural network (CNN)-Transformer cross-training approach.

FIG. 9 shows an example mean teacher training approach 900 for training a machine learning model. As illustrated in FIG. 9, some embodiments may employ teacher-student or consistency-based training approaches, or a "mean teacher" approach, in which predictions from one model instance are used to guide training of another model instance. Such approaches may improve training stability and robustness when labeled ultra-low-frequency targets are sparse or noisy. In a mean teacher approach, parameters of a teacher network may be updated, for example, as an exponential moving average of weights of a student network, which may result in the teacher network's evolving more slowly but providing a more stable target. The student network may thus be trained with an additional consistency constraint that encourages its predictions to align with those of the teacher(s) under different perturbations. This framework may help regularize the student network's training, enhancing training stability and improving generalizations. It should be appreciated that example embodiments are not limited to a single teacher network and/or a single student network.

FIG. 10 shows an example CNN-Transformer cross-training training approach 1000 for training a machine learning model. As illustrated in FIG. 10, some embodiments may employ multiple model components or architectures trained in parallel or jointly, such as convolutional and transformer-based components. These components may exchange information or be constrained by consistency losses to improve convergence and reconstruction quality. For example, the CNN-Transformer cross-training approach may provide cross-training in which the CNN may focus on details, while the Transformer may focus on consistency.

The specific model approaches and/or architectures are provided by way of example, and other machine learning approaches and/or architectures capable of reconstructing ultra-low-frequency seismic components may be used without departing from the scope of the disclosure.

In example embodiments, the enhanced seismic data generated by the trained machine learning model may be used as an input to full waveform inversion. In some embodiments, FWI may be performed using the enhanced seismic data and an initial subsurface velocity model to generate an updated subsurface velocity model. The reconstructed ultra-low-frequency seismic components may improve stability, convergence, or accuracy of the FWI process, for example, during early inversion stages that are sensitive to long-wavelength velocity information. The updated subsurface velocity model may provide an improved representation of subsurface structures relative to velocity models generated without the enhanced low-frequency seismic content.

Example embodiments may provide a new survey design that combines conventional ocean bottom node (OBN) acquisition with a sparser sampled ultra-low-frequency (ULF) survey using specialized sources, such as a TUNED PULSE SOURCE^{™} (TPS^{™}), at scale for a Full Waveform Inversion (FWI) model building and imaging. Conventional OBN acquisition and ULF survey data can be acquired either separately or jointly, including using low-frequency sources on the same source boats as conventional sources. One or more ULF sources can be deployed in their own grid covering the full survey area or covering a fraction of the conventional shot density survey area, e.g., a few percent of the conventional shot density survey area.

Example embodiments may provide a new machine learning technique utilizing sparse ULF data as the training target to enhance ULF content in conventional source data collected over the survey or nearby. Example embodiments may provide a new machine learning technique that, once trained and validated, can be applied across the full conventional dataset, may enhance ULF information survey-wide at a large scale.

In example embodiments, the training process may include two parts. For example, a first warm-up part may use OBN data as targets. The disclosed approach may further include, after the first warm-up stage, a fine-tuning stage that uses ULF data as targets, including performing iterative refinements (e.g., SSL) on targets to generate better targets for iterative training rounds. For example, the disclosed approach may use ULF data that optionally includes OBN as warm-up data, which provides technical advantages, such as those described herein, over conventional approaches.

In some embodiments, the techniques described herein may relate to a survey design including: a conventional OBN acquisition utilizing conventional sources; and a sparser sampled ultra-low-frequency (ULF) survey utilizing specialized ULF sources to enable FWI model building and imaging. In some embodiments, the techniques described herein may relate to a survey design, wherein the specialized sources are tuned pulse sources. In some embodiments, the techniques described herein may relate to a survey design, wherein the conventional OBN acquisition is designed to be acquired jointly with the sparser sampled ULF survey. In some embodiments, the techniques described herein may relate to a survey design, wherein the specialized ULF sources are on the same boat as the conventional sources. In some embodiments, the techniques described herein may relate to a survey design, wherein the conventional OBN acquisition is designed to be acquired separately from the sparser sampled ULF survey. In some embodiments, the techniques described herein may relate to a survey design, wherein the specialized ULF sources are designed to be deployed on their own grid covering a full survey. In some embodiments, the techniques described herein may relate to a survey design, wherein the specialized ULF sources are designed to be deployed on a fraction of conventional shot density. In some embodiments, the techniques described herein may relate to a survey design, wherein the fraction is less than 10%.

In some embodiments, the techniques described herein may relate to a machine learning method including utilizing sparse ultra-low-frequency (ULF) data as a training target to enhance ULF content in conventional source data collected over a survey or nearby a survey. In some embodiments, the techniques described herein may relate to a machine learning method including applying a trained and validated model across a full conventional OBN acquisition dataset to enhance ultra-low-frequency (ULF) information survey-wide at scale. In some embodiments, the techniques described herein may relate to the invention substantially as herein described.

Example embodiments may include systems and methods for enhancing seismic data. Ocean bottom node seismic data and sparse ultra-low-frequency seismic data may be obtained. A machine learning model may be trained using the ocean bottom node seismic data and the sparse ultra-low-frequency seismic data to enhance low-frequency content. The trained model may be executed on the ocean bottom node seismic data to reconstruct ultra-low-frequency seismic components, e.g., absent from the OBN seismic data. The enhanced seismic data may be used to perform full waveform inversion, updating a subsurface velocity model. This approach may improve convergence and accuracy of the full waveform inversion by providing low-frequency seismic content that enhances stability and convergence. The sparse ultra-low-frequency seismic data may be sampled at a lower spatial or shot density than the ocean bottom node seismic data.

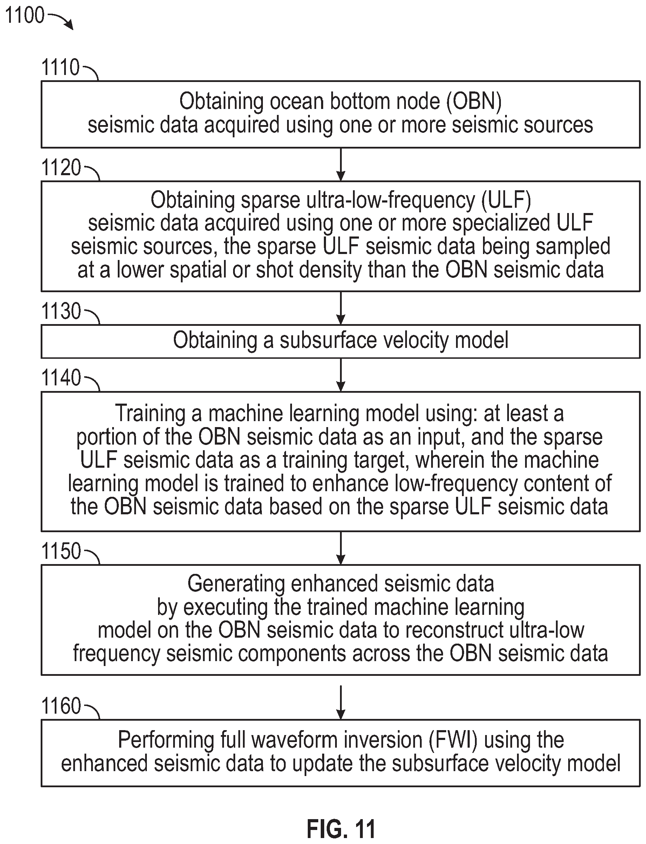

FIG. 11 is a flowchart for an example method.

In FIG. 11, an example computer-implemented method 1100 may include, at 1110, obtaining ocean bottom node (OBN) seismic data acquired using one or more seismic sources. The example method 1100 may further include, at 1120, obtaining sparse ultra-low-frequency (ULF) seismic data acquired using one or more specialized ULF seismic sources, the sparse ULF seismic data being sampled at a lower spatial or shot density than the OBN seismic data. The example method 1100 may further include, at 1130, obtaining a subsurface velocity model. The example method 1100 may further include, at 1140, training a machine learning model using: at least a portion of the OBN seismic data as an input, and the sparse ULF seismic data as a training target, wherein the machine learning model is trained to enhance low-frequency content of the OBN seismic data based on the sparse ULF seismic data. The example method 1100 may further include, at 1150, generating enhanced seismic data by executing the trained machine learning model on the OBN seismic data to reconstruct ultra-low-frequency seismic components across the OBN seismic data. The example method 1100 may further include, at 1160, performing full waveform inversion (FWI) using the enhanced seismic data to update the subsurface velocity model.

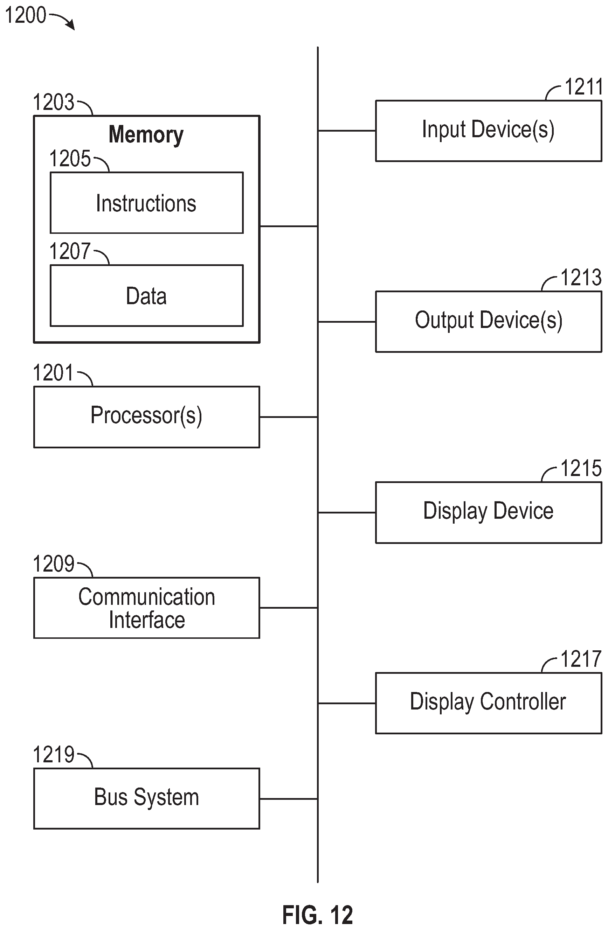

FIG. 12 illustrates certain components that may be included within a computer system according to an example embodiment of the present disclosure.

FIG. 12 illustrates certain components that may be included within a computer system 1200, which may be used to control features according to embodiments of the present disclosure, such as the features discussed with reference to FIGs. 1-11. One or more computer systems 1200 may be used to implement the various devices, components, and systems described herein.

The computer system 1200 includes one or more processors 1201. The processor(s) 1201 may be a single processor or may include multiple processors and/or sub-processors. The processor(s) 1201 may be a general-purpose single- or multi-chip microprocessor (e.g., an Advanced RISC (reduced instruction set computing) Machine (ARM)), a special-purpose microprocessor (e.g., a digital signal processor (DSP)), a microcontroller, a programmable gate array, etc. The processor(s) 1201 may be referred to as a central processing unit (CPU). Although a single processor(s) 1201 is shown in the computer system 1200 of FIG. 12, in an alternative configuration, a combination of processors (e.g., an ARM and DSP) could be used. In one or more embodiments, the computer system 1200 further includes one or more graphics processing units (GPUs), which can provide processing services related to both entity classification and graph generation.

The computer system 1200 also includes memory 1203 in electronic communication with the processor(s) 1201. The memory 1203 may be any electronic component capable of storing electronic information. For example, the memory 1203 may be embodied as random access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM) memory, registers, at least one non-transitory computer-readable and/or processor-readable medium, and so forth, including combinations thereof. The memory 1203 may include a single memory device or multiple memory devices.

Instructions 1205 and data 1207 may be stored in the memory 1203. The instructions 1205 may be executable by the processor(s) 1201 to implement some or all of the functionality disclosed herein. Executing the instructions 1205 may involve the use of the data 1207 that is stored in the memory 1203. Any of the various examples of modules and components described herein may be implemented, partially or wholly, as instructions 1205 stored in memory 1203 and executed by the processor(s) 1201. Any of the various examples of data described herein may be among the data 1207 that is stored in memory 1203 and used during execution of the instructions 1205 by the processor(s) 1201.

A computer system 1200 may also include one or more communication interfaces 1209 for communicating with other electronic devices. The communication interface(s) 1209 may be based on wired communication technology, wireless communication technology, or both. Some examples of communication interfaces 1209 include a Universal Serial Bus (USB), an Ethernet adapter, a wireless adapter that operates in accordance with an Institute of Electrical and Electronics Engineers (IEEE^{®}) 802.11 wireless communication protocol, a BLUETOOTH^{®} wireless communication adapter, and an infrared (IR) communication port.

A computer system 1200 may also include one or more input devices 1211 and one or more output devices 1213. Some examples of input devices 1211 include a keyboard, mouse, microphone, remote control device, button, joystick, trackball, touchpad, and lightpen. Some examples of output devices 1213 include a speaker and a printer. One specific type of output device that is typically included in a computer system 1200 is a display device 1215. Display devices 1215 used with embodiments disclosed herein may utilize any suitable image projection technology, such as liquid crystal display (LCD), light-emitting diode (LED), gas plasma, electroluminescence, or the like, and may be provided in any desired number. At least one display controller 1217 may also be provided, for converting data 1207 stored in the memory 1203 into text, graphics, and/or moving images (as appropriate) shown on the display device 1215.

The various components of the computer system 1200 may be coupled together by one or more buses, which may include a power bus, a control signal bus, a status signal bus, a data bus, etc. For the sake of clarity, the various buses are illustrated in FIG. 12 as a bus system 1219.

The following are sections in accordance with at least one embodiment of the present disclosure:
Clause 1: A computer-implemented method, including: obtaining ocean bottom node (OBN) seismic data acquired using one or more seismic sources, obtaining sparse ultra-low-frequency (ULF) seismic data acquired using one or more specialized ULF seismic sources, the sparse ULF seismic data being sampled at a lower spatial or shot density than the OBN seismic data, obtaining a subsurface velocity model, training a machine learning model using: at least a portion of the OBN seismic data as an input, and the sparse ULF seismic data as a training target, wherein the machine learning model is trained to enhance low-frequency content of the OBN seismic data based on the sparse ULF seismic data, generating enhanced seismic data by executing the trained machine learning model on the OBN seismic data to reconstruct ultra-low-frequency seismic components across the OBN seismic data, and performing full waveform inversion (FWI) using the enhanced seismic data to update the subsurface velocity model.
Clause 2: The method of clause 1, wherein the enhanced seismic data improves convergence or accuracy of the FWI.
Clause 3: The method of clause 1, wherein the enhanced seismic data provides low-frequency seismic content that improves stability or convergence of the FWI.
Clause 4: The method of clause 1, wherein the sparse ULF seismic data is sampled at less than ten percent of a shot density of the OBN seismic data.
Clause 5: The method of clause 1, wherein the training the machine learning model includes using the sparse ULF seismic data to guide reconstruction of ultra-low-frequency seismic components absent from the OBN seismic data.
Clause 6: The method of clause 1, wherein training the machine learning model includes iteratively refining reconstruction of ultra-low-frequency seismic components using the sparse ultra-low-frequency (ULF) seismic data.
Clause 7: The method of clause 1, wherein the training the machine learning model includes at least one of: a mean-teacher training approach in which a teacher model generates predictions used to supervise training of a student model, or cross-training a convolutional neural network and a transformer network using a consistency constraint between respective model outputs.
Clause 8: One or more non-transitory computer-readable media storing instructions that, when executed by at least one processor of a computing system, cause the computing system to perform operations, the operations including: obtaining ocean bottom node (OBN) seismic data acquired using one or more seismic sources, obtaining sparse ultra-low-frequency (ULF) seismic data acquired using one or more specialized ULF seismic sources, the sparse ULF seismic data being sampled at a lower spatial or shot density than the OBN seismic data, obtaining a subsurface velocity model, training a machine learning model using: at least a portion of the OBN seismic data as an input, and the sparse ULF seismic data as a training target, wherein the machine learning model is trained to enhance low-frequency content of the OBN seismic data based on the sparse ULF seismic data, generating enhanced seismic data by executing the trained machine learning model on the OBN seismic data to reconstruct ultra-low-frequency seismic components across the OBN seismic data, and performing full waveform inversion (FWI) using the enhanced seismic data to update the subsurface velocity model.
Clause 9: The one or more non-transitory computer-readable media of clause 8, wherein the enhanced seismic data improves convergence or accuracy of the FWI.
Clause 10: The one or more non-transitory computer-readable media of clause 8, wherein the enhanced seismic data provides low-frequency seismic content that improves stability or convergence of the FWI.
Clause 11: The one or more non-transitory computer-readable media of clause 8, wherein the sparse ULF seismic data is sampled at less than ten percent of a shot density of the OBN seismic data.
Clause 12: The one or more non-transitory computer-readable media of clause 8, wherein the training the machine learning model includes: using the sparse ULF seismic data to guide reconstruction of ultra-low-frequency seismic components absent from the OBN seismic data, and iteratively refining reconstruction of ultra-low-frequency seismic components using the sparse ultra-low-frequency (ULF) seismic data.
Clause 13: The one or more non-transitory computer-readable media of clause 8, wherein the training the machine learning model includes at least one of: a mean-teacher training approach in which a teacher model generates predictions used to supervise training of a student model, or cross-training a convolutional neural network and a transformer network using a consistency constraint between respective model outputs.
Clause 14: A system, including: one or more processors, and at least one memory including at least one non-transitory computer-readable medium storing instructions that, when executed by at least one of the one or more processors, cause the system to perform operations, the operations including: obtaining ocean bottom node (OBN) seismic data acquired using one or more seismic sources, obtaining sparse ultra-low-frequency (ULF) seismic data acquired using one or more specialized ULF seismic sources, the sparse ULF seismic data being sampled at a lower spatial or shot density than the OBN seismic data, obtaining a subsurface velocity model, training a machine learning model using: at least a portion of the OBN seismic data as an input, and the sparse ULF seismic data as a training target, wherein the machine learning model is trained to enhance low-frequency content of the OBN seismic data based on the sparse ULF seismic data, generating enhanced seismic data by executing the trained machine learning model on the OBN seismic data to reconstruct ultra-low-frequency seismic components across the OBN seismic data, and performing full waveform inversion (FWI) using the enhanced seismic data to update the subsurface velocity model.
Clause 15: The system of clause 14, wherein the enhanced seismic data improves convergence or accuracy of the FWI.
Clause 16: The system of clause 14, wherein the enhanced seismic data provides low-frequency seismic content that improves stability or convergence of the FWI.
Clause 17: The system of clause 14, wherein the sparse ULF seismic data is sampled at less than ten percent of a shot density of the OBN seismic data.
Clause 18: The system of clause 14, wherein the training the machine learning model includes using the sparse ULF seismic data to guide reconstruction of ultra-low-frequency seismic components absent from the OBN seismic data.
Clause 19: The system of clause 14, wherein training the machine learning model includes iteratively refining reconstruction of ultra-low-frequency seismic components using the sparse ultra-low-frequency (ULF) seismic data.
Clause 20: The system of clause 14, wherein the training the machine learning model includes at least one of: a mean-teacher training approach in which a teacher model generates predictions used to supervise training of a student model, or cross-training a convolutional neural network and a transformer network using a consistency constraint between respective model outputs.

Systems and software, e.g., implemented on a non-transitory computer-readable medium, for performing the methods discussed herein are also within the scope of embodiments of the present disclosure.

Embodiments of the present disclosure may thus utilize a special-purpose or general-purpose computing system including computer hardware, such as, for example, one or more processors and system memory. Example methods, operations, and/or processes may be computer-implemented. Embodiments within the scope of the present disclosure also include physical and other computer-readable media for carrying or storing computer-executable instructions and/or data structures, including applications, tables, data, libraries, or other modules used to execute particular functions or direct selection or execution of other modules or may cause such execution. Such computer-readable media can be any available media that can be accessed by a general-purpose or special-purpose computer system. Computer-readable media that store computer-executable instructions (or software instructions) are physical storage media. Computer-readable media that carry computer-executable instructions are transmission media. Thus, by way of example, and not limitation, embodiments of the present disclosure can include at least two distinctly different kinds of computer-readable media, namely physical storage media or transmission media. Combinations of physical storage media and transmission media should also be included within the scope of computer-readable media.

Both physical storage media and transmission media may be used to temporarily store or carry software instructions in the form of computer-readable program code that allows performance of embodiments of the present disclosure. Physical storage media may further be used to persistently or permanently store such software instructions. Examples of physical storage media include physical memory (e.g., RAM, ROM, EPROM, EEPROM, etc.), optical disk storage (e.g., CD, DVD, HD DVD, Blu-ray, etc.), storage devices (e.g., magnetic disk storage, tape storage, diskette, etc.), flash or other solid-state storage or memory, or any other non-transmission medium, which can be used to store program code in the form of computer-executable instructions or data structures and can be accessed by a general-purpose or special-purpose computer, whether such program code is stored as or in software, hardware, firmware, or combinations thereof.

A "network" or "communications network" may generally be defined as one or more data links that enable the transport of electronic data between computer systems and/or modules, engines, and/or other electronic devices. When information is transferred or provided over a communication network or another communications connection (either wired, wireless, or a combination of wired or wireless) to a computing device, the computing device properly views the connection as a transmission medium. Transmission media can include a communication network and/or data links, carrier waves, wireless signals, and the like, which can be used to carry desired program or template code means or instructions in the form of computer-executable instructions or data structures and can be accessed by a general-purpose or special-purpose computer.

Further, upon reaching various computer system components, program code in the form of computer-executable instructions or data structures can be transferred automatically or manually from transmission media to physical storage media (or vice versa). For example, computer-executable instructions or data structures received over a network or data link can be buffered in memory (e.g., RAM) within a network interface module (NIC), and then eventually transferred to computer system RAM and/or to less volatile physical storage media at a computer system. Thus, it should be understood that physical storage media can be included in computer system components that also (or even primarily) utilize transmission media.

One or more specific embodiments of the present disclosure are described herein. These described embodiments are examples of the presently disclosed techniques. Additionally, in an effort to provide a concise description of these embodiments, not all features of an actual embodiment may be described in the specification. It should be appreciated that in the development of any such actual implementation, as in any engineering or design project, numerous embodiment-specific decisions will be made to achieve the developers' specific goals, such as compliance with system-related and business-related constraints, which may vary from one embodiment to another. Moreover, it should be appreciated that such a development effort might be complex and time-consuming, but would nevertheless be a routine undertaking of design, fabrication, and manufacture for those of ordinary skill having the benefit of this disclosure.

The articles "a," "an," and "the" are intended to mean that there are one or more of the elements in the preceding descriptions. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element described in relation to an embodiment herein may be combinable with any element of any other embodiment described herein. Numbers, percentages, ratios, or other values stated herein are intended to include that value, and also other values that are "about," "~", or "approximately" the stated value, as would be appreciated by one of ordinary skill in the art encompassed by embodiments of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01% of a stated value.

A person having ordinary skill in the art should realize, in view of the present disclosure, that equivalent constructions do not depart from the spirit and scope of the present disclosure, and that various changes, substitutions, and alterations may be made to embodiments disclosed herein without departing from the spirit and scope of the present disclosure. Equivalent constructions, including functional "means-plus-function" clauses, are intended to cover the structures described herein as performing the recited function, including both structural equivalents that operate in the same manner, and equivalent structures that provide the same function. It is the express intention of the applicant not to invoke means-plus-function or other functional claiming for any claim except for those in which the words "means for" appear together with an associated function. Each addition, deletion, and modification to the embodiments that falls within the meaning and scope of the claims is to be embraced by the claims. Any trademarks mentioned herein are the property of their respective owners. Example embodiments are not limited to any particularly-mentioned products, trademarks, or properties.

The terms "approximately," "about," "substantially," and "~" as used herein represent an amount close to the stated amount that still performs a desired function or achieves a desired result. For example, the terms "approximately," "about," "substantially," and "~" may refer to an amount that is within less than 5% of, within less than 1% of, within less than 0.1% of, and within less than 0.01% of a stated amount. Further, it should be understood that any directions or reference frames in the preceding description are merely relative directions or movements. For example, any references to "up" and "down" or "above" or "below" are merely descriptive of the relative position or movement of the related elements.

The present disclosure may be embodied in other specific forms without departing from its spirit or characteristics. The described embodiments are to be considered as illustrative and not restrictive. The scope of the disclosure is, therefore, indicated by the appended claims rather than by the foregoing description. Changes that come within the meaning and range of equivalency of the claims are to be embraced within their scope.

## Claims

1. A computer-implemented method (1100), comprising:
obtaining ocean bottom node (OBN) seismic data (1207)(400)(500) acquired using one or more seismic sources;
obtaining sparse ultra-low-frequency (ULF) seismic data (1207)(400)(500) acquired using one or more specialized ULF seismic sources, the sparse ULF seismic data being sampled at a lower spatial or shot density than the OBN seismic data;
obtaining a subsurface velocity model (650)(680)(800)(1130);
training a machine learning model (710) using:
at least a portion of the OBN seismic data as an input (800); and
the sparse ULF seismic data as a training target (800),
wherein the machine learning model is trained to enhance low-frequency content of the OBN seismic data based on the sparse ULF seismic data;
generating enhanced seismic data (670) by executing the trained machine learning model on the OBN seismic data to reconstruct ultra-low-frequency seismic components across the OBN seismic data; and
performing full waveform inversion (FWI) (660)(690) using the enhanced seismic data to update the subsurface velocity model.

2. The method of claim 1, wherein the enhanced seismic data improves convergence or accuracy of the FWI.

3. The method of any of claims 1-2, wherein the enhanced seismic data provides low-frequency seismic content that improves stability or convergence of the FWI.

4. The method of any of claims 1-3, wherein the sparse ULF seismic data is sampled at less than ten percent of a shot density of the OBN seismic data.

5. The method of any of claims 1-4, wherein the training the machine learning model comprises using the sparse ULF seismic data to guide reconstruction of ultra-low-frequency seismic components absent from the OBN seismic data.

6. The method of any of claims 1-5, wherein training the machine learning model comprises iteratively refining reconstruction of ultra-low-frequency seismic components using the sparse ultra-low-frequency (ULF) seismic data.

7. The method of any of claims 1-6, wherein the training the machine learning model comprises at least one of:
a mean-teacher training approach in which a teacher model generates predictions used to supervise training of a student model; or
cross-training a convolutional neural network and a transformer network using a consistency constraint between respective model outputs.

8. One or more non-transitory computer-readable media storing instructions (1205) that, when executed by at least one processor of a computing system (100A)(1200), cause the computing system to perform operations, the operations comprising the method of any of claims 1-7.

9. A system, comprising:
one or more processors (1201)(104A); and
at least one memory (1203)(106) comprising at least one non-transitory computer-readable medium storing instructions (1205) that, when executed by at least one of the one or more processors, cause the system to perform operations, the operations comprising:
obtaining ocean bottom node (OBN) seismic data (1207)(400)(500) acquired using one or more seismic sources;
obtaining sparse ultra-low-frequency (ULF) seismic data (1207)(400)(500) acquired using one or more specialized ULF seismic sources, the sparse ULF seismic data being sampled at a lower spatial or shot density than the OBN seismic data;
obtaining a subsurface velocity model (650)(680)(800)(1130);
training a machine learning model (710) using:
at least a portion of the OBN seismic data as an input (800); and
the sparse ULF seismic data as a training target (800),
wherein the machine learning model is trained to enhance low-frequency content of the OBN seismic data based on the sparse ULF seismic data;
generating enhanced seismic data (670) by executing the trained machine learning model on the OBN seismic data to reconstruct ultra-low-frequency seismic components across the OBN seismic data; and
performing full waveform inversion (FWI) (660)(690) using the enhanced seismic data to update the subsurface velocity model.

10. The system of claim 9, wherein the enhanced seismic data improves convergence or accuracy of the FWI.

11. The system of any of claims 9-10, wherein the enhanced seismic data provides low-frequency seismic content that improves stability or convergence of the FWI.

12. The system of any of claims 9-11, wherein the sparse ULF seismic data is sampled at less than ten percent of a shot density of the OBN seismic data.

13. The system of any of claims 9-12, wherein the training the machine learning model comprises using the sparse ULF seismic data to guide reconstruction of ultra-low-frequency seismic components absent from the OBN seismic data.

14. The system of any of claims 9-13, wherein training the machine learning model comprises iteratively refining reconstruction of ultra-low-frequency seismic components using the sparse ultra-low-frequency (ULF) seismic data.

15. The system of any of claims 9-14, wherein the training the machine learning model comprises at least one of:
a mean-teacher training approach in which a teacher model generates predictions used to supervise training of a student model; or
cross-training a convolutional neural network and a transformer network using a consistency constraint between respective model outputs.
